# EUROPEAN PATENT APPLICATION

(11) **EP 1 027 822 A2**
(43) Date of publication of application: **16.08.2000**
(21) Application number: 00301078.2
(22) Date of filing: 11.02.2000
(51) Int. Cl.: A01G 9/24

(54) **Retractable roof structure**

(30) Priority: 13.02.1999 GB 9903165
(71) Applicant: National Polytunnels Limited, Bamber Bridge, Preston PR5 6EA (GB)
(72) Inventor: Duxbury, Alfred William, Bamber Bridge, Preston PR5 6EA (GB)
(74) Representative: Waddington, Richard

(57) **Abstract**

A retractable roof structure for a green house comprises a frame structure (18a/18b) and a flexible cover (24). The frame structure (18a/18b) includes a push rod (14) which is extendable by means of levers (22) attached thereto thereby maintaining even tension in the cover (24) when the roof structure is in either an open or a closed configuration.

## Description

This invention relates to a retractable roof structure and to a method of retracting a roof structure, particularly, but not limited to, a retractable roof structure having a flexible cover and a method of retracting a roof structure having a flexible cover.

Greenhouses are sometimes provided with retractable roof structures to allow for variation of the growing conditions within the greenhouse, such as the temperature therein. An existing retractable roof structure for a greenhouse comprises glass or rigid cladding material. The use of flexible materials, such a polythene, has disadvantages because when the roof structure is in a closed position loose material on the roof structure which is present to allow the roof structure to be folded can be blown about and damaged in windy conditions.

It is an objection of the present invention to address the above mentioned disadvantages.

According to one aspect of the present invention a retractable roof structure comprises a jointed frame structure and a flexible cover portion extending at least partially across the frame structure, in which the frame structure includes an extendible projection of the frame structure, which extendible projection is operable to extend and thereby take up loose cover portion when the roof structure is in an extended configuration and to retract when jointed sections of the frame section are pivoted relative to one another to retract the roof structure.

The extendible projection is preferably located at, close to or adjacent to a joint of the frame structure.

The extendible projection may be operable to extend and thereby maintain tension, preferably even tension, in the cover portion.

The retractable roof structure may be a retractable roof structure for a greenhouse

The flexible cover portion may be made of a translucent material, which may be polythene, or another lightweight flexible material.

The jointed frame structure may comprise roof trusses, which are preferably arranged in pairs. The roof trusses may define a pitched roof structure. The roof trusses may be pivotally attached to a remainder of the roof structure.

Joints of the roof structure may be defined by ends of corresponding roof truss pairs, which may be connected, preferably by a common joint portion. The roof truss pairs may be actuable to pivot relative to each other about the joint portion.

The joint portion may have bracket portions for receiving the roof trusses. Preferably the bracket portions are arranged at opposite sides of the joint portion.

The joint portion may have the extendible projection slidably associated therewith. Preferably the joint portion includes a collar portion in which the extendible projection is received.

The extendible projection may comprise extension means secured between the extendible projection and one of the roof trusses. Preferably extension means for each roof truss are provided. The extension means may comprise a lever, which is preferably pivotally attached at both ends between the extendible projection and its roof truss.

The lever is preferably attached to the extendible projection below the joint portion. The lever is preferably attached to the extendible projection below its connection to the roof truss.

The extension means may be operable to extend the extendible projection when the angle between a roof truss pair is increased. An increase in the angle between two roof trusses preferably increases the angle made between two extension means, where provided.

The extension means may be operable to retract the extendible projection when the angle between a roof truss pair is decreased. A decrease in the angle between roof trusses preferably decreases the angle made between two extension means.

The roof structure may include frame structure retraction means, which may comprise a carriage which is laterally movable along a portion of the roof structure.

The lower end of a first roof truss may be secured to the frame structure refraction mans. The lower end of a second truss forming a pair with the first truss may be pivotally mounted on a portion of the roof structure, which is preferably a fixed portion of the roof structure.

The invention extends to a building, preferably a greenhouse, having a retractable roof structure described above.

According to another aspect of the present invention a method of taking up and giving out a section of loose flexible cover portion in a retractable roof structure comprises providing an extendible projection at a joint of a jointed frame structure, which extendible projection is caused to extend and take up loose material when the roof structure is extended and to retract to provide loose material when the roof structure is retracted.

The roof structure may be a pitched roof structure, the pitch of which is varied when the roof structure is retracted and/or extended.

The roof structure may be defined by a series of roof truss pairs, lower ends of which may be moved together or apart to retract or extend the roof structure.

Relative movement of the roof trusses may cause the extendible projection to extend or retract.

All the features disclosed herein may be combined with any of the above aspects, in any combination.

A specific embodiment of the present invention will now be described, by way of example, and with reference to the accompanying drawings, in which:

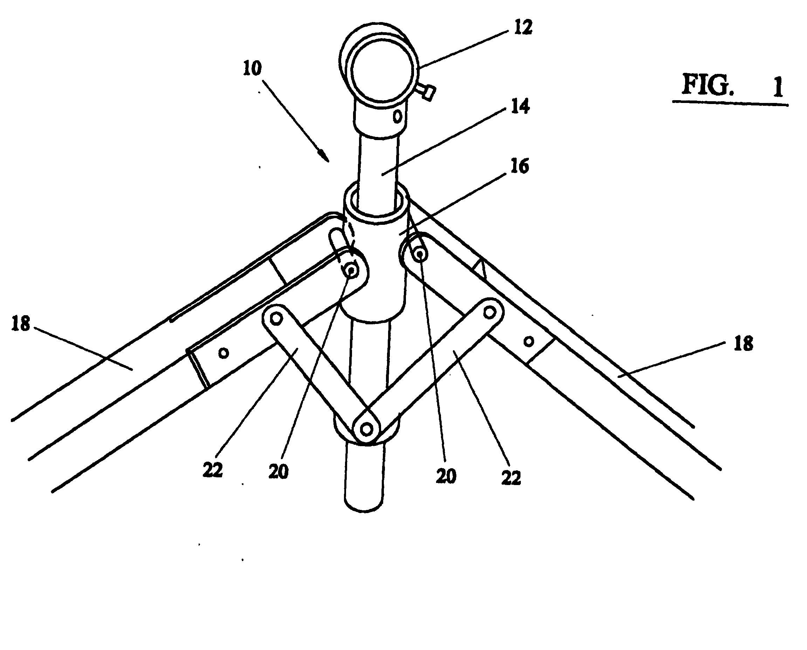

Figure 1 is a schematic side view of an adjustable ridge purlin; and
Figure 2 is a schematic side view of a retractable roof structure having ridge purlins as shown in Figure 1.

A moveable ridge purlin 10 comprises a ridge bracket 12, which is arranged to receive a ridge pole (not shown) of a roof structure. The ridge bracket 12 is mounted on the end of a push rod 14 which is slidably received in a collar 16. Two roof trusses 18 are pivotally secured to the collar 16 by pins 20. The roof trusses 18 form an inverted V having its apex at the slidable collar 16.

One end of a lever arm 22 is pivotally secured to an upper end of one of the roof trusses 18 and the other end is pivotally secured to the push rod 14. Each roof truss 18 has a lever arm, giving two lever arms 22 for each movable ridge purlin 10. The lever arms 22 extend downwardly from the roof trusses 18 to the push rod 14. The downward angle ensures the correct direction of motion of the push rod 14, which is described below.

In a typical roof structure a plurality of pairs of roof trusses 18a, 18b is provided. In this example each pair of roof trusses 18a/b has an associated ridge bracket 12, push rod 14, slidably mounted collar 16 and lever arms 22. The moveable ridge purlin sets 10 will connected via a ridge pole passed through each of the ridge brackets 12.

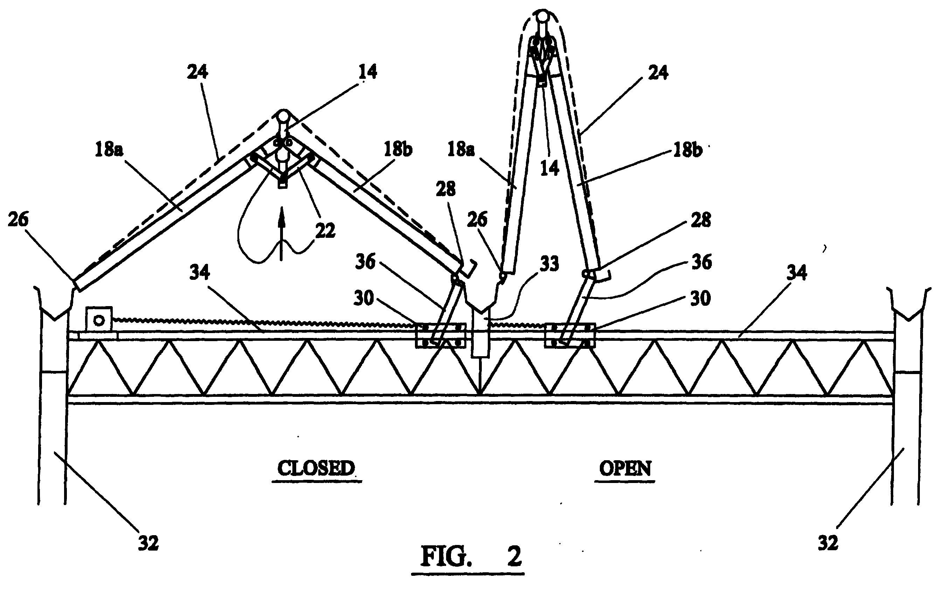

Figure 2 shows schematically a roof structure, part of which (on the right hand side in Figure 2) is in an open configuration and another part of which (on the left hand side in Figure 2) is in a closed configuration.

The roof structure comprises vertical support members 32 and horizontal support members 34. Carriages 30 are mounted for lateral movement on the horizontal support members 34. A link member 36 in pivotally secured between each carriage 30 and a corresponding roof truss 18b. Each pair of roof trusses 18a/b has its own associated carriage 30. The other roof truss 18a is pivotally secured to one of the vertical support members 32 or an intermediate support 33 at its lower end 26.

A dashed line 24 in Figure 2 represents a sheet of polyethylene which forms the cladding material for this roof structure, which is conveniently used for a greenhouse. When the roof structure is in an open configuration the distance around the perimeter from the base 26 of one roof truss 18a to the base 28 of its corresponding roof truss 18b, to which the polyethylene 24 is secured is greater than the same measurement when the roof structure is in a closed configuration, because of the smaller angle between the roof trusses 18a/b. Consequently, in order to give sufficient polyethylene 24 for the roof structure to be opened, loose material is present when the roof structure is in a closed configuration. The use of the moveable ridge purlin described below allows for the loose polyethylene 24 to be taken up by the movement of the push rod 14.

In use, in order to take up loose polyethylene cladding material 24 the push rod 14 must move upwardly when the roof structure moves from an open to a closed position. In a similar way, push rod 14 must move downwards when the roof structure is moved from a closed configuration to an open configuration.

The manner in which the push rod 14 is moved will now described.

When the roof structure is moved from the closed configuration shown in Figure 2 to the open configuration shown in Figure 2 the carriage 30 moves the base of one of the roof trusses 18b towards the base of its corresponding roof truss 18a, the base 26 of which is pivotally secured to the remainder of the roof structure. As the lower ends of roof trusses 18a/b are moved closer to each other the angle made between the lower ends of the lever arms 22 is reduced which causes the push rod 14, to which the lever arms 22 are attached, to be retracted into the collar 16. This results in a reduction in the distance between the upper ends of the roof trusses 18a/b and the ridge bracket 12. This reduction in distance between the ridge bracket 12 and the upper ends of the roof trusses 18a/b reduces the length of the measurement between the lower end 26 of one roof truss 18a, the ridge bracket 12 and the lower end 28 of the corresponding roof truss 18b. The downward movement of the push rod 14 is permitted because the lever arms 22 extend downwardly from their attachment at the roof trusses 18a/b to the attachment at the lever arms 22. If the lever arms had extended upwardly from the roof trusses 18a/b the opposite movement of the push rod 14 would be achieved.

When the roof structure is moved from the open configuration shown in Figure 2 to the closed configuration shown in Figure 2, the carriage 30 is moved to separate the lower ends 26 and 28 of the roof trusses 18a/b. This has the effect of increasing the angle made between the lever arms 22 which results in the push rod 14 moving upwardly through the collar 16 and thereby taking up slack in the polythene cladding 24 to prevent flapping being caused by wind.

The moveable ridge purlin and retractable roof structure described herein permits the use of much lighter and cheaper flexible cladding materials, such as polythene and the like for retractable roof structures without undesirable flapping. The movement of the push rod allows slack created by movement of the roof structure to be taken up to prevent undesirable flapping of the cladding material.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A retractable roof structure comprises a jointed frame structure and a flexible cover portion (24) extending at least partially across the frame structure, characterised in that the frame structure includes an extendible projection (14) of the frame structure, which extendible projection is operable to extend and thereby take up loose cover portion (24) when the roof structure is in an extended configuration and to retract when jointed sections (18a/18b) of the frame section are pivoted relative to one another to retract the roof structure.

2. A retractable roof structure as claimed in claim 1, characterised in that the extendible projection (14) is located close to a joint of the frame structure.

3. A retractable roof structure as claimed in claim 1 or 2, characterised in that the extendible projection (14) is operable to extend and thereby maintain tension in the cover portion (24).

4. A retractable roof structure as claimed in any preceding claim, characterised in that the retractable roof structure is a retractable roof structure for a greenhouse.

5. A retractable roof structure as claimed in any preceding claim, characterised in that the extendible projection (14) comprises extension means (22) secured between the extendible projection (14) and at least one frame section (18a/18b).

6. A retractable roof structure as claimed in claim 5, characterised in that the extension means comprises a lever (22), which is pivotally attached at both ends between the extendible projection (14) and its frame section (18a/18b).

7. A retractable roof structure as claimed in claim 6, characterised in that the lever (22) is attached to the extendible projection (14) below the joint of the frame section.

8. A retractable roof structure as claimed in claim 6 or 7, characterised in that the lever (22) is attached to the extendible projection (14) below its connection to the frame section (18a/18b).

9. A retractable roof structure as claimed in anyone of claims 5 to 8, characterised in that the extension means (22) is operable to extend the extendible projection (14) when the angle between two frame sections (18a/18b) is increased.

10. A retractable roof structure as claimed in any one of claims 5 to 9, characterised in that the extension means (22) is operable to retract the extendible projection (14) when the angle between two frame sections (18a/18b) is decreased.

11. A retractable roof structure as claimed in any preceding claim, characterised in that the roof structure includes frame structure retraction means, which comprises a carriage (30) which is laterally movable along a portion of the roof structure (34).

12. A method of taking up and giving out a section of loose flexible cover portion in a retractable roof structure, characterised in that the method comprises providing an extendible projection (14) at a joint of a jointed frame structure (18a/18b), which extendible projection (14) is caused to extend and take up loose material when the roof structure is extended and to retract to provide loose material when the roof structure is retracted.
